# EUROPEAN PATENT APPLICATION

(11) **EP 4 664 438 A1**
(43) Date of publication of application: **17.12.2025**
(21) Application number: 24181509.1
(22) Date of filing: 11.06.2024
(51) Int. Cl.: G09B 9/00, G06F 1/16, G06F 3/01

(54) **BELT SYSTEM FOR EXTENDED REALITY TRAINING**

(71) Applicant: Hologare GmbH, 81379 München (DE)
(72) Inventor: PETERSEN, Leif, 81379 München (DE)
(74) Representative: Laqua, Bernd Christian Kurt

(57) **Abstract**

A belt system (100) for enabling security tool-based extended reality, XR, training of a user is provided. The system (100) comprises a training tool (300), a belt (200) configured to detachably receive the training tool (300) and an attachment sensor configured to detect an attachment status of the training tool (300). The attachment status indicates whether the training tool (300) is attached to the belt (200). The system (100) further comprises a communication interface coupled to the attachment sensor and configured to transmit data indicative of the attachment status to an extended reality system (400).

## Description

### Technical Field

The present disclosure generally relates to extended reality (XR) training of a user, e.g., for training police, military or security personnel. In particular, a belt system, a belt or holding element attachable to a belt and a training tool for enabling security tool-based extended reality training of a user are provided.

### Background

Security personnel employed in jobs in the security sector, e.g., in law enforcement, in the military or in other organizations employing security personnel, can be confronted with very challenging situations in which they need to use security tools, for example a baton, pepper spray, handcuffs, a flashlight, a non-lethal weapon like a stun gun or a lethal weapon like a short gun or a long gun.

To ensure a high probability for use of a correct security tool in a given situation, as well as a correct handling of the selected security tool, it is crucial that the security personal is well-trained for such situations. Commonly, the security personnel is thus trained over several years before being admitted to the job and paired with personnel having years of experience in the profession.

With the advance in technology, an increasing part of the training of security personnel comprises training by the assistance of extended reality (XR) training programs, e.g., virtual reality (VR) or augmented reality (AR) training programs. For example, existing virtual reality training programs utilize a replica of a specific gun together with a virtual reality headset.

However, such extended reality training programs are limited to a specific setup, e.g., simulating the use of a specific gun. While such training may improve the handling of the specific gun, the training situations are far from realistic situations and thus of limited value. For example, the use of multiple different security tools and in particular the decision-making process of which security tool to use at which situation cannot be trained with the specific setups of existing extended reality training programs.

Further, the replica used in such a specific setup, e.g., a replica of a pistol, is often handled differently compared to the real security tool, e.g., the real pistol. For example, the replica may have a different weight or different dimensions compared to the real security tool, which may have a negative effect on the preparation of the security personnel for the application of the real gun in real professional life later on.

### Summary

There is a need for providing an improved technique for extended reality training of a user, e.g., law enforcement, military or other security personnel, that addresses at least some of the aforementioned problems, or other problems. In particular there is a need for a technique that improves the realism of extended reality training.

According to a first aspect, a belt system for enabling security tool-based extended reality (XR) training of a user is provided. The system comprises a training tool, a belt configured to detachably receive the training tool, an attachment sensor configured to detect an attachment status of the training tool, wherein the attachment status indicates whether the training tool is attached to the belt, and a communication interface coupled to the attachment sensor and configured to transmit data indicative of the attachment status to an extended reality system.

The extended reality may comprise virtual reality or augmented reality, and the extended reality system may be configured to execute a program, e.g., a simulation, based at least in part on the data transmitted by the communication interface. The belt may be any commercially available belt, for example. In some variants, the belt may be one of a tactical belt, a battle belt, a gun belt and a duty belt.

In some variants, the attachment sensor may comprise an electromagnetic sensor, an optical sensor or a mechanical sensor. For example, the attachment sensor may comprise one of a proximity sensor, e.g., a Hall-sensor, a pressable button, and a photoelectric sensor, e.g., a light barrier. In a preferred variant, a Hall-sensor may be configured to detect one of a proximity and a relative position of a magnet thereto. The attachment status may then be detected based at least in part on the proximity and the position of the Hall-sensor relative to the magnet. Additionally or alternatively, other known sensors may be utilized.

The communication interface may be configured to receive one or more signals from the attachment sensor coupled thereto. In some variants, the communication interface may be configured to forward the one or more signals to the extended reality system, e.g., directly or indirectly using a communication bridge as explained later herein. Before forwarding the one or more signals, the communication interface may process the one or more signals, if needed. To forward the received or processed one or more signals, the communication interface may be configured to generate one or more further signals and/or data based on the received one or more signals and to transmit the generated one or more further signals and/or data to the extended reality system in the manner described above.

In some variants, one of the belt and the training tool may comprise the attachment sensor and the communication interface. For example, one of the belt and the training tool may comprise a Hall-sensor and the communication interface coupled thereto and the other one may comprise a magnet configured to be detectable by the Hall-sensor.

In some variants, the belt may comprise a holding element, e.g., a holster or a belt clip, configured to detachably receive the training tool. The holding element may be associated with a specific training tool and located at a predefined location of the belt, for example. As a result, the realism of the training may be improved since e.g. a predefined position of a tool on a police belt used in practice may be accurately simulated.

In some variants, the holding element may comprise the attachment sensor and the communication interface. For example, a holster may comprise a Hall-sensor and a communication interface coupled thereto. In this variant, the training tool may comprise a magnet detectable by the Hall-sensor of the holster when the tool is received by the holster.

In some variants, the holding element may comprise a security element movable between a secured state and an unsecured state. The security element may be configured to prevent a detachment of the training tool from the belt when the training tool is attached to the belt and the security element is in the secured state, and allow a detachment of the training tool from the belt when the training tool is attached to the belt and the security element is in the unsecured state. For example, the security element may comprise a latch with a snap fastener and the secured state may be identified based on the snap fastener being in a fastened or an opened state.

The holding element may further comprise a security sensor configured to detect a security status of the security element. The security status may indicate whether the security element is in the secured state. The holding element may still further comprise a communication interface coupled to the security sensor and configured to transmit data indicative of the security status to the extended reality system. The communication interface coupled to the security sensor may be the communication interface coupled to the attachment sensor, e.g., in case the belt, and in particular the holding element, comprises the attachment sensor.

In some variants, the training tool may comprise one of a weapon, a flashlight and handcuffs. The weapon may be a baton, pepper spray or a gun, e.g., one of a lethal gun or a non-lethal gun, in particular a long gun or a short gun, e.g., a pistol or a stun gun, such as a taser. In these variants, the realism of the training may be improved compared to variants using a replica of one of the aforementioned security tools, since the training tool may comprise the actual weapon, flashlight or handcuffs to be used by the user in the profession the user is trained for.

In some variants, when the training tool comprises a weapon, the training tool may further comprise an actuation sensor configured to detect an actuation of the weapon and a communication interface coupled to the actuation sensor and configured to transmit data indicative of the actuation of the weapon to the extended reality system. The actuation sensor may be configured to detect actuation of a trigger of the weapon. In some variants, the actuation sensor may be configured for detecting a reload of the weapon or a change of an operating mode of the weapon, e.g., secured or unlocked. In some variants, the training tool may comprise a plurality of actuation sensors, e.g., one for detecting each of the actuation of the trigger, the reload and the change of the operating mode. As a result, at least one of an actuation of a weapon, e.g., firing of a gun, a reload of the weapon and a currently active operating mode may be simulated in a program executed by the extended reality system.

The communication interface coupled to the actuation sensor may be the communication interface coupled to the attachment sensor, e.g., in case the training tool comprises the attachment sensor. In other words, one communication interface may be coupled to one or more of the attachment sensor, the security sensor and the actuation sensor. Alternatively, each of the attachment sensor, the security sensor and the actuation sensor may be coupled to a different communication interface.

In some variants, the system may comprise a plurality of training tools. At least two of the plurality of training tools may comprise a different one selected from a taser, a pistol, any of the other gun types mentioned above, pepper spray, a flashlight, a baton, and handcuffs. In some variants, each of the plurality of training tools may comprise a different one selected from a taser, a pistol, any of the other gun types mentioned above, pepper spray, a flashlight, a baton, and handcuffs. Each of the plurality of tools may comprise at least one communication interface as described herein. Further, the belt may comprise a holding element for each of the plurality of training tools. In some variants, the belt, and in particular one or more of the holding elements, may comprise a communication interface for each of the plurality of training tools.

As a result, the realism of training of the user can be improved compared to only using one training tool in that the user can be trained on deciding which one of the provided tools is to be used in a given situation. Further, each of the plurality of training tools may be associated with a predefined position on the training belt so that the user may be trained to use a given tool without having to watch / focus on which tool the user has selected, e.g., to improve user behavior during limited visibility, or to train usage of the right tool out of reflex.

In some variants, the training tool, or at least one of the plurality of training tools, may comprise a replica of a weapon (e.g., a gun, such as a taser, a pistol or any of the other gun types mentioned above, pepper spray, or a baton), a flashlight, and handcuffs. The replica may comprise an actuation sensor configured to detect an actuation of the replica and a communication interface coupled to the actuation sensor and configured to transmit data indicative of the actuation of the replica to the extended reality system.

In some variants, the system may further comprise a communication bridge, wherein the communication bridge may optionally be attachable to the belt or to a piece of clothing of a user, for example. The communication bridge may be configured to receive data from the communication interface coupled to the attachment sensor using a first data communication technology, and forward the received data using a second data communication technology to the extended reality system. The first data communication technology may be Bluetooth and the second data communication technology may be WiFi, for example. The communication bridge may further be configured to receive and forward data from multiple communication interfaces, e.g., any communication interface of the belt system described herein, and in particular from a plurality of communication interfaces when the system comprises a plurality of training tools, as described above. Such a communication setup allows for an increased communication range between the belt system and the extended reality system compared to a system where e.g. the communication interface coupled to the attachment sensor has to directly communicate with the extended reality system. Further, the communication interface coupled to the attachment sensor, or any other of the described communication interfaces of the belt system, may be generally located closer to the communication bridge than to the extended reality system when the belt system is in use. As a result, the communication setup comprising the bridge may allow for the data to be transmitted from the communication interface over the bridge to the extended reality system in a very robust and efficient manner, allowing for a correct and near real-time simulation based on the transmitted data.

The communication between the communication interfaces and the communication bridge as well as the communication between the communication bridge and the extended reality system may be established using bidirectional data transfer. Once the communication is established, the data transfer may be unidirectional from the communication interfaces to the communication bridge and/or from the communication bridge to the extended reality system. Utilizing unidirectional data transfer after a communication (or connection in general) has been established reduces the latency of the data transfer and thus allows for a more precise simulation in near real-time.

In some variants, the communication bridge may comprise a connection status display configured to indicate at least one of a connection that has been established using the first data communication technology and a connection that has been established using the second data communication technology. In some variants, when the system comprises the plurality of training tools, the display may indicate a connection that has been established for each of the training tools. Displaying established connections may facilitate setup of the belt system.

In some variants, the training tool may comprise a tracker configured to enable tracking of a position and/or an orientation of the training tool. The tracker may be an optical tracker or an electromagnetic tracker, for example. Tracking the position and/or orientation of the training tool may allow simulating the position and/or orientation of the tool in a program executed by the extended reality system and thus may further improve the realism of the training.

At least one of the belt and the training tool may comprise a battery and an onboard charging board for handling power management of at least some of the electronic elements described herein, e.g., at least one of the sensor(s), the communication interface(s) and the tracker. The battery may be a rechargeable battery and the charging board may comprise a charging interface, e.g., a USB-C port. The charging board may further comprise one or more light emitting diodes (LEDs) configured to indicate a charging state of the battery. In some variants, when the system comprises a plurality of training tools, each of the plurality of training tools may comprise a battery and an onboard charging board as described herein.

In some variants, the system may further comprise the extended reality system. The extended reality system may be configured to receive data from the communication interface coupled to the attachment sensor and execute an extended reality program based at least in part on the received data.

Executing the extended reality program may comprise receiving data from the communication interface coupled to the attachment sensor, e.g., directly or indirectly using the communication bridge, and providing a simulated training tool in the executed program based on the indicated attachment status. Executing the extended reality program may further comprise receiving data from at least one of the communication interface coupled to the security sensor, the communication interface coupled to the actuation sensor of the training tool, and a tracking system configured to track the position and/or orientation of the tracker. The data may be received directly or indirectly using the communication bridge. Executing the extended reality program may still further comprise simulating, based on the received data, at least one of the security status, an actuation of the training tool and a position and/or orientation of the training tool in the extended reality system. The extended reality system may comprise a processor configured for executing the extended reality program. The extended reality system may as such comprise a computing device. In some variants, the computing device may be or may be coupled to a virtual reality headset, for example.

According to a second aspect, a belt or a holding element attachable to a belt for enabling security tool-based extended reality training of a user is provided. The belt or the holding element is configured to detachably receive a training tool and comprises an attachment sensor configured to detect an attachment status of the training tool. The attachment status indicates whether the training tool is attached to the belt. The belt or the holding element further comprises a communication interface coupled to the attachment sensor and configured to transmit data indicative of the attachment status to an extended reality system.

The belt, the holding element, the attachment sensor and the communication interface coupled to the attachment sensor may be the belt, holding element, attachment sensor and communication interface as described herein with respect to the first aspect. As such, those aspects described with regard to the belt system of the first aspect which are applicable to the belt or holding element of the second aspect may be comprised by the belt or holding element of the second aspect as well. Unnecessary repetitions are thus omitted in the following.

According to a third aspect, a training tool for security tool-based enabling extended reality training of a user is provided. The training tool is configured to be detachably attachable to a belt and comprises an attachment sensor configured to detect an attachment status of the training tool. The attachment status indicates whether the training tool is attached to the belt. The training tool further comprises a communication interface coupled to the attachment sensor and configured to transmit data indicative of the attachment status to an extended reality system.

The training tool, the attachment sensor and the communication interface coupled to the attachment sensor may be the training tool, attachment sensor and communication interface as described herein with respect to the first aspect. As such, those aspects described with regard to the belt system of the first aspect which are applicable to the training tool of the third aspect may be comprised by the training tool of the third aspect as well. Unnecessary repetitions are thus omitted in the following.

In some variants according to the first or third aspect, the system or the training tool may comprise a trigger detection device for detecting an actuation of a trigger of a weapon, e.g., a gun, to enable a simulation of the trigger actuation in a program executed by the extended reality system. The trigger detection device may comprise a housing configured to fasten the trigger detection device to the weapon, a trigger sensor configured and positionable to detect a movement of the trigger from a released position to an actuated position, and a communication interface coupled to the trigger sensor and configured to transmit data indicative of an actuation of the trigger to the extended reality system in reaction to detecting the movement of the trigger from the released position to the actuated position.

In some variants, the actuation sensor configured to detect an actuation of a weapon may be the trigger sensor and the communication interface coupled to the actuation sensor may be the communication interface coupled to the trigger sensor.

The released position may be any position from a most distal position, i.e., a default position when the trigger is not touched, to any position proximal to the default position and prior to the point where a release of a shot from the weapon is triggered. The actuated position may be any position from the point where a release of a shot from the weapon is triggered to a most proximal position the trigger can mechanically be moved to. In one variant, the actuated position may be the most proximal position the trigger can mechanically be moved to.

In some variants, the trigger sensor may be detachably fastenable to the housing. Additionally or alternatively, the trigger sensor may be fastenable to the housing at a variable position relative thereto for allowing adaptation of the position of the trigger sensor after the trigger detection device has been fastened to the weapon. In other words, the trigger sensor may be positionable to detect a movement of the trigger due to having a variable fastening position relative to the housing. For example, the housing may comprise an elongated receiving element. The elongated receiving element may be configured to receive a fastening element at different positions thereof, and the fastening element may be configured to fasten the trigger sensor to the housing. Alternatively or additionally, the housing may have a plurality of receiving elements located at different positions of the housing. As a result, the trigger sensor may be fastenable to the housing and positionable relative thereto so that, when the trigger detection device is fastened to the weapon, the trigger sensor extends from the housing so that at least a part of the trigger sensor is positioned adjacent to the trigger of the weapon allowing the trigger sensor to detect movement of the trigger from the released position to the actuated position.

Additionally or alternatively, the housing may be configured to be fastenable to the weapon at different positions of the weapon so that the trigger detection device may be positionable to detect a movement of the trigger from a released position to an actuated position.

Configuring the trigger sensor to be positionable to detect a movement of the trigger, i.e., fastenable to the housing at a variable position relative thereto allows adapting the trigger detection device to be used with a plurality of different weapons.

In some variants, the trigger sensor may comprise a photoelectric sensor comprising an emitter configured to emit a light beam and a receiver configured to detect the emitted light beam. The emitter and the receiver may be positioned relative to the trigger so that the trigger prevents a detection of the light beam in the released position and allows a detection of the light beam when moved to the actuated position (called light-switching mode herein). Alternatively, the emitter and the receiver may be positioned relative to the trigger so that the trigger allows a detection of the light beam in the released position and prevents a detection of the light beam when moved to the actuated position (called dark-switching mode herein).

These two alternative actuation detection modes may allow a use of the trigger detection device with a wide variety of weapon types. In particular, depending on the distance between the default position when the trigger is not touched, to the point where a release of a shot from the weapon is triggered, one or the other detection mode may be preferable. For example, the light-switching mode may be generally preferable in conjunction with shorter weapons like handguns, e.g., pistols, and the dark-switching mode may be generally preferable in conjunction with larger weapons, e.g., rifles.

In some variants, the emitter of the photoelectric sensor may be configured to emit infrared (IR) light and the receiver may comprise a corresponding light filter allowing only IR light to pass therethrough. Such a setup may provide a robust detection technique that is not prone to erroneous trigger detections, e.g., due to detected ambient or scattered light. Further, the emitter and receiver may be precisely aligned relative to each other to reduce disturbances from other light sources that may be detected by the receiver.

In some variants, the trigger sensor comprises a flexible printed circuit board and one or more surface mounted devices (SMDs). The combination of a flexible printed circuit board with one or more surface mounted devices allows a high control of the dimensions of the trigger sensor. In some variants, a height of the trigger sensor may be less than 5 mm, preferably less than 4, 3 or 2 mm. Such a small height compared to e.g. the trigger itself prevents or at least reduces hindrance of the user due to the trigger sensor, and thus allows for a high realism when using the trigger detection device with a weapon.

In some variants, the trigger sensor may be at least one of detachably attachable to the housing, configured to enclose the trigger to prevent accidental activation of the trigger sensor by a user, and configured to extend along a portion of the underside of the weapon, wherein, optionally, the trigger sensor covers a portion of the underside that is located between a trigger guard and the trigger of the weapon. Like the small height of the trigger sensor, enclosure of the trigger and extending along a portion of the underside of the weapon may further reduce hindrance of the user due to the trigger sensor, and thus likewise allow for a high realism when using the trigger detection device with a weapon.

In some variants, the housing may be configured to clampingly engage with the weapon to fasten the trigger detection device to the weapon. Additionally or alternatively, at least a part of the housing may be designed as a sleeve configured to receive a part of the weapon. In particular, the housing may be configured to be fastenable to the weapon without necessitating any structural amendments to the weapon, thus preventing any legal issues that may occur when weapons are physically altered.

In some variants, the housing may comprise an electronics housing configured to accommodate at least the communication interface coupled to the trigger sensor. The electronics housing may further be configured to accommodate at least one of a battery configured to power the trigger detection device, a port enabling charging of the battery, a switch configured to turn on or off the trigger detection device, and at least one status light emitting diode (LED) indicating at least one of battery life and a connection that has been established with the communication interface coupled to the trigger sensor. The aforementioned electronic elements may improve the usability of the trigger sensor.

In some variants, the housing may comprise a tracker configured to enable tracking of a position and/or an orientation of the weapon, when the trigger detection device is attached thereto. The tracker may be detachably attached to the housing. The tracker may be an optical tracker or an electromagnetic tracker. Tracking the position and/or orientation of the trigger detection device may allow simulating the position and/or orientation of the weapon the trigger detection device is attached to in a program executed by the extended reality system, and thus may further improve the realism of the training.

In some variants, the system according to the first aspect may comprise the trigger detection device and at least one of: a weapon, wherein the trigger detection device is fastened to the weapon, and an extended reality system configured to receive the data indicative of the actuation of the trigger, and simulate, based on the received data, a trigger actuation in a program executed by the extended reality system.

When the trigger detection device comprises the tracker, the system may further comprise a tracking system configured to track the position and/or orientation of the weapon and to transmit data indicative of the tracked position and/or orientation to the extended reality system. The extended reality system may be further configured to simulate, based on the data received from the tracking system, the position and/or orientation of the weapon.

The tracking system may comprise an optical sensor, e.g., a camera, or an electromagnetic sensor, e.g., a sensor coil. The tracking system may comprise a communication interface configured to transmit data indicative of the tracked position and/or orientation to the extended reality system.

The extended reality system may further be configured to execute a method for simulating an actuation of a trigger of a weapon in a program executed by the extended reality system. The method may comprise receiving data indicative of an actuation of the trigger of the weapon from a trigger detection device as described herein. The method may further comprise simulating, based on the received data, an actuation of the trigger in the program executed by the extended reality system.

### Brief Description of the Drawings

Further details, advantages and aspects of the present disclosure will become apparent from the following embodiments taken in conjunction with the drawings, wherein:
- Fig. 1: shows a belt system for enabling security tool-based extended reality (XR) training of a user;
- Fig. 2: shows the belt of the system of Fig. 1 including the multiple different training tools attached thereto in more detail;
- Fig. 3: shows one of the training tools of Figs. 1 and 2, namely a pistol, and a trigger detection device attached to the pistol;
- Fig. 4: shows the pistol with the trigger sensor of the trigger detection device of Fig. 3;
- Fig. 5: shows the trigger sensor of Figs. 3 and 4 in detail;
- Fig. 6: shows a schematic overview of electronic elements of a training tool;
- Fig. 7: shows multiple communication interfaces of the belt system of Fig. 1 in direct communication with the extended reality system of Fig. 1;
- Fig. 8: shows multiple communication interfaces of the belt system of Fig. 1 in communication with the extended reality system of Fig. 1 using a communication bridge; and
- Fig. 9: shows a flow diagram of a method for simulating an actuation of a trigger of a weapon in a program executed by an extended reality system.

### Detailed Description

In the following description of exemplary embodiments, the same reference numerals are used to denote the same or equivalent components.

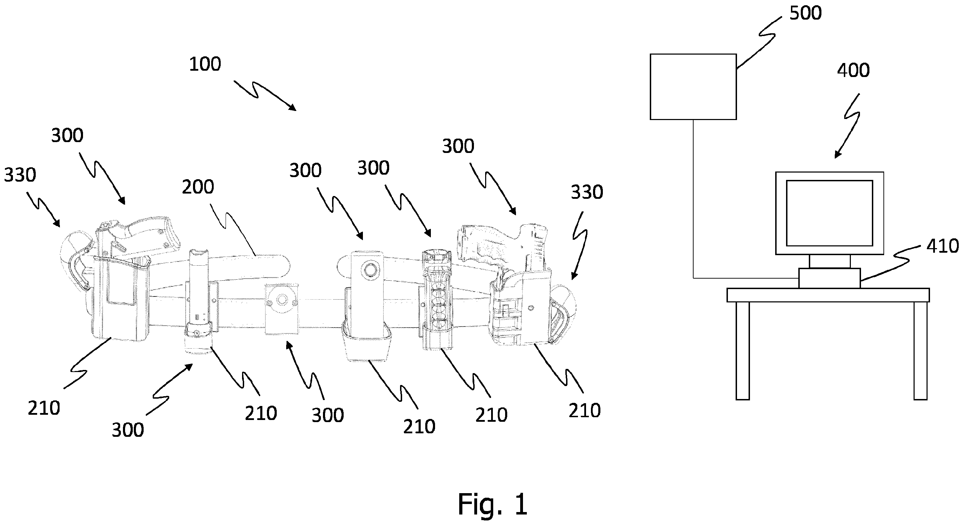

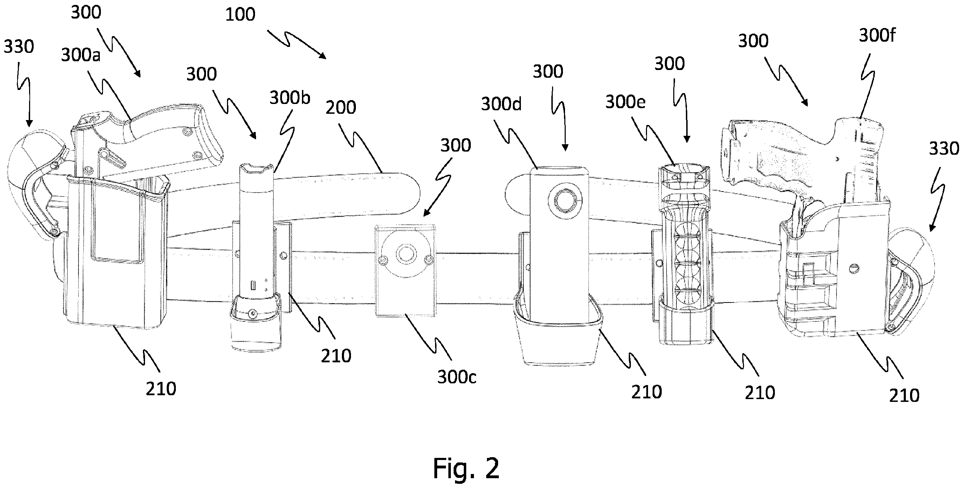

Fig. 1 shows a belt system 100 for enabling security tool-based extended reality (XR) training of a user. The system comprises a belt 200, multiple different training tools 300 attached to the belt 200, an extended reality system 400 and a tracking system 500. The belt 200 of Fig. 1 and the multiple different training tools 300 attached thereto are also shown in Fig. 2 in more detail.

The belt 200 may be a commercially available belt 200 comprising multiple holding elements 210 (see Fig. 2). Each holding element 210 is positioned at a predefined location of the belt 200 and configured for holding one of the different training tools 300. The shown holding elements 210 comprise holsters specifically shaped to receive one of the different training tools 300 associated therewith, wherein the training tools 300 shown in Figs. 1 and 2 comprise, from left to right, a taser 300a, a flashlight 300b, handcuffs 300c, a baton 300d, pepper spray 300e and a pistol 300f. In some variants, one or more of the taser 300a, flashlight 300b, handcuffs 300c, baton 300d, pepper spray 300e and pistol 300f may be a replica thereof.

In some variants, one or more of the holding elements 210 may each comprise a security element (not shown) configured for securing the received training tool 300 to the holding element, i.e., to prevent removal of a received training tool 300 from the holding element in a first, secured state and to allow removal of the received tool 300 from the holding element in a second, unsecured state. For example, the security element may be a latch with a snap fastener. The holding element 210 may further comprise a security sensor (not shown) configured to detect a security status of the security element, i.e., whether the security element is in the secured state or the unsecured state. The holding element 210 may further comprise a communication interface (not shown) coupled to the security sensor and configured to transmit data indicative of the security status, i.e., the state of the security element, to the extended reality system 400 (shown in Fig. 1). The extended reality system 400 comprises a computing device 410 configured for executing an extended reality program, e.g., a virtual reality (VR) program or an augmented reality (AR) program. Providing data indicative of the security status to the extended reality system 400 enables simulating the security element state in the executed extended reality program to increase the realism of the program.

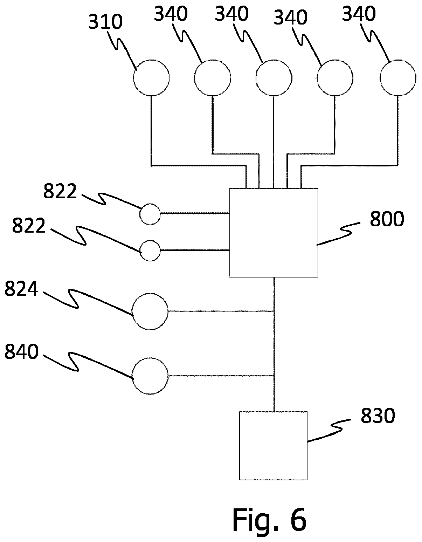

In the variant shown in Figs. 1 and 2, each of the holding elements 210 comprises a magnet (not shown) and each of the training tools 300 comprises an attachment sensor 310 (see Fig. 6), e.g., a hall sensor 310. The hall sensors 310 are positioned and configured to detect the proximity of the magnets when the training tools 300 are received by the holding elements 210. Based on the detected proximity, an attachment status indicating whether a respective training tool 300 is attached to the belt 200, i.e., received by the respective holder 210 associated with the training tool 300, can be determined.

Further, each of the training tools 300 shown in Figs. 1 and 2 comprises a communication interface (not shown) coupled to the attachment sensor 310 thereof and configured to transmit data indicative of the attachment status of the training tool 300 to the extended reality system 400 shown in Fig. 1. Providing data indicative of the attachment status of a respective one of the training tools 300 to the extended reality system 400 enables simulating a training tool 300 in the executed extended reality program to increase the realism of the program. In particular, the computing device 410 is configured to provide a simulated training tool 300 in the executed program when the attachment status indicates that the tool 300 is detached from the belt and to remove the simulated training tool 300 from the executed program when the attachment status indicates that the tool 300 is attached to the belt 200, i.e., received by the holding element 210.

Still further, each of the training tools 300 comprises an actuation sensor 340 (see Fig. 6), e.g., a button configured to detect an actuation of the training tool 300. In case of the training tool 300 comprising a replica, the actuation sensor 340 may be integrated in the replica, e.g., in the form of a pressable button. In case of the training tool 300 comprising an actual tool as used in the profession of a user (instead of a replica), the actuation sensor 340 may be a sensor configured to be detachably attachable to the tool 300.

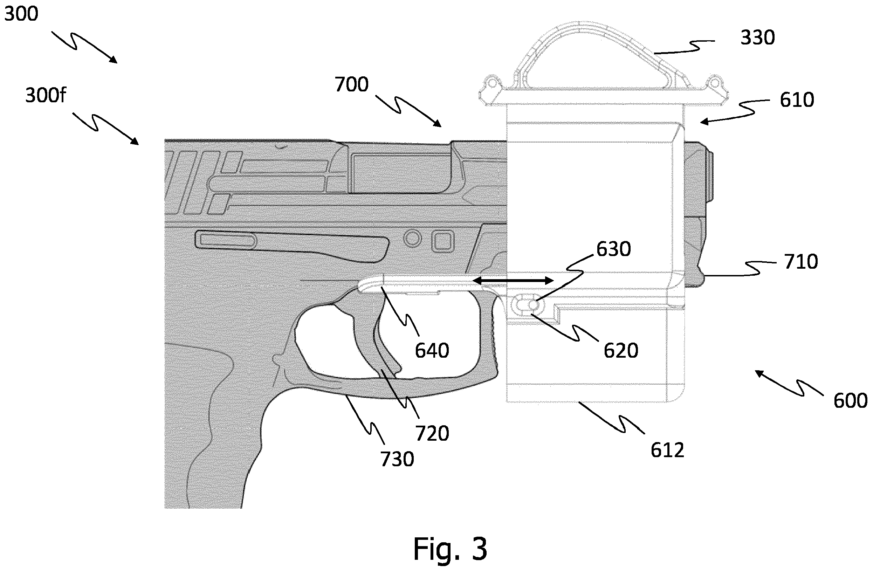

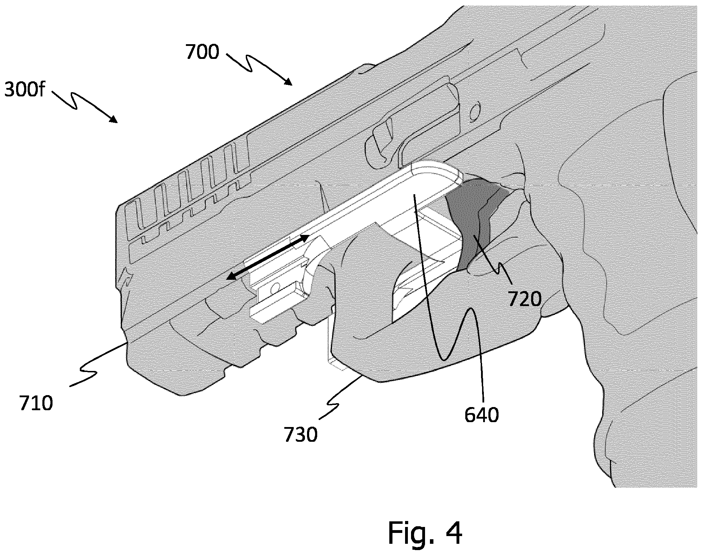

In the following, the details of an actuation sensor 340 are described with reference to Figs. 3 and 4.

Fig. 3 shows one of the training tools 300 of Figs. 1 and 2, namely a pistol 300f comprising a trigger detection device 600 attached thereto. The trigger detection device 600 comprises a housing 610 configured to receive a part of a shaft 700 of the pistol 300f therein. The housing 610 is further configured to receive a screw (not shown) configured to clampingly engage with a rail 710 of the pistol 300f. As a result, the trigger detection device 600 is attachable to the pistol 300f without physically altering any parts of the pistol 300f. Additionally or alternatively, other attachment mechanisms for attaching the housing 610 to the pistol 300f may be used. For example, the housing 610 may comprise parts configured to be movable relative to each other to clampingly engage with the pistol 300f.

The trigger detection device 600 further comprises an actuation sensor 340 in the form of a trigger sensor 640. The trigger sensor 640 is detachably attached to the housing 610. The housing 610 comprises an elongated receiving element 620 extending in a direction parallel to the shaft 700 of the pistol 300f to a certain extent (seen as an oval-like hole 620 in Fig. 3) when the trigger detection device 600 has been attached to the pistol 300f. The elongated receiving element 620 is configured to receive a fastening element 630 at different positions thereof (i.e., along its mentioned extension direction), wherein the fastening element 630 is configured to fasten the trigger sensor 640 to the housing 610. Due to the elongated extension of the receiving element 620 parallel to the shaft 700, the trigger sensor 640 is movable relative to the housing 610 of the trigger detection device 600 in a translatory manner to a certain extent along a direction parallel to the extension direction of the elongated receiving element 620, after the trigger detection device 600 has been attached to the pistol 300f, as indicated by the black arrows in Figs. 3 and 4. The horizontal movement may be a continuous movement allowing a precise positioning of the trigger sensor 640 relative to the housing 610. As a result, the trigger sensor 640 is positionable relative to the trigger 720 of the pistol 300f so that the trigger sensor 640 may detect movement of the trigger from a released position to an actuated position as described herein. In other words, the trigger detection device 600 may be calibrated by moving the trigger sensor 640 relative to the housing 610 after the trigger detection device 600 has been attached to the pistol 300f. Since the trigger sensor 640 is movable relative to the housing 610, the trigger detection device 600 is usable with a plurality of different weapons or replicas thereof having different dimensions. In particular, the trigger detection device 600 may be usable with any weapon or replica of a weapon that comprises a trigger.

The housing 610 further comprises an electronics housing 612. The electronics housing 612 is detachably attached to the housing 600 and is configured to accommodate the electronic elements (not shown) of the trigger detection device 600. The electronic elements may comprise a communication interface coupled to the trigger sensor 640, a battery, a port enabling charging of the battery, a switch configured to turn on or off the trigger detection device and at least one status light emitting diode (LED) indicating at least one of battery life and a connection that has been established with the communication interface coupled to the trigger sensor 640. The communication interface coupled to the trigger sensor 640 is configured to transmit, based on the detected movement of the trigger 720, data indicative of an actuation of the trigger 720 to the extended reality system 400 shown in Fig. 1. The extended reality system 400 is further configured to simulate an actuation of the trigger 720, i.e., firing of the pistol 300f, based on the data received from communication interface coupled to the trigger sensor 640.

Further, as can be seen best in Fig. 4, the trigger sensor 640 is configured to cover a portion of the underside of the pistol 300f, in particular, a portion of the underside of the shaft 700 of the pistol 300f. The trigger sensor 640 shown in Fig. 4, for example, covers essentially the portion of the pistol located between the trigger 720 and a trigger guard 730 extending downwardly from the underside of the pistol 300f in front of the trigger 720. As a result, a user may only perceive a surface similar to the underside of a gun so that the user is not hindered or distracted by the trigger sensor 640. Further, since the trigger sensor 640 is configured to have a small height (e.g., less than 5 mm, preferably less than 4, 3 or 2 mm) compared, e.g., to the trigger 720, the difference in handling of the pistol 300f with an attached trigger detection device 600 and without an attached trigger detection device 600 is minimized.

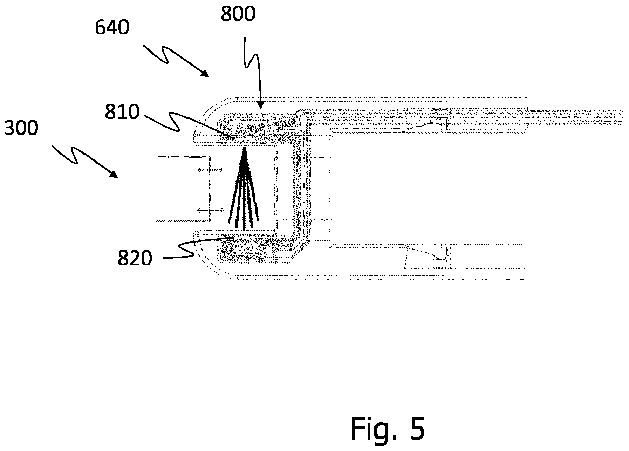

Fig. 5 shows the trigger sensor 640 of Figs. 3 and 4 in more detail. In the given example, the shown trigger sensor 640 is a photoelectric sensor comprising an emitter 810 configured to emit a light beam. The light beam shown in Fig. 5 is a schematic representation thereof. In practice, a light beam may e.g. be more focused than exemplarily illustrated. The trigger sensor 640 further comprises a receiver 820 configured to detect the emitted light beam. The trigger sensor 640 shown in Figs. 3 and 4 is positioned relative to the trigger 720 so that the trigger 720 prevents a detection of the light beam in a released position and allows a detection of the light beam when moved to an actuated position, i.e., the trigger sensor 640 is positioned in the light-switching mode as described herein.

The trigger sensor 640 shown in Fig. 5 is further coupled to the electronic elements located in the electronics housing 612 by wire, e.g., for powering the trigger sensor 640 and for enabling a communication between the trigger sensor 640 and the communication interface coupled thereto. In other variants, the trigger sensor 640 may be configured for wireless communication, e.g., with the communication interface.

Returning to Figs. 1 and 2, each of the taser and the pistol 300f further comprises a tracker 330 attached thereto. The trackers 330 attached to the taser and the pistol 300f may be identical trackers 330. Each tracker 330 is an electromagnetic tracker 330 comprising a tracking coil (not shown) configured to emit a magnetic field. The emitted magnetic field may be detected by the tracking system 500 shown in Fig. 1. In particular, the tracking system 500 comprises a sensor coil (not shown) configured to detect the magnetic field emitted by the tracking coil of the tracker 330. The tracking system 500 further comprises a communication interface (not shown) coupled to the sensor coil and configured transmit data indicative of the position and/or orientation of the tracker 330, and thus of the taser or the pistol 300f the tracker 330 is attached to, to the extended reality system 400 shown in Fig. 1. The computing device 410 is further configured to simulate a position and/or orientation of the taser and the pistol 300f based on the data received from the tracking system 500 to further increase the realism of the executed program.

As explained in detail above, a training tool 300 of the system may comprise a plurality of electronic elements, such as a plurality of sensors, e.g., an attachment sensor 310, one or more actuation sensors 340, and one or more communication interfaces 320.

A schematic overview of the electronic elements of a training tool 300 is shown in Fig. 6. In the shown example, the training tool 300 comprises an attachment sensor 310 and four actuation sensors 340. The sensors 310, 340 are coupled to a processor 800 comprising a single communication interface (not shown). The communication interface comprises a Bluetooth chip (not shown). The training tool 300 further comprises two status LEDs 822, a switch 824 configured to turn on or off the electronic components of the training tool 300, a battery 830 and a port 840 for charging the battery 830, all coupled to the processor 800.

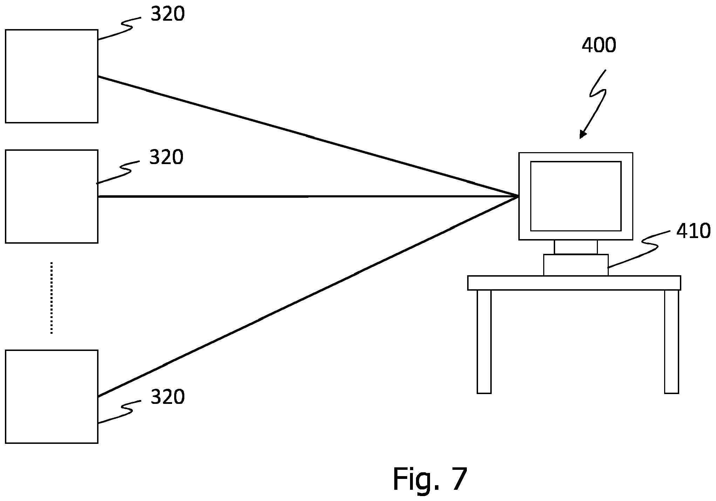

Fig. 7 shows a plurality of communication interfaces 320 in direct communication with the extended reality system 400 shown in Fig. 1. In the shown variant, each communication interface 320 is a communication interface 320 of a different training tool 300 as described with reference to Figs. 1 to 6 and configured to transmit data to the extended reality system 400 using Bluetooth.

In other variants, a training tool 300 and/or a holding element 210 may comprise one or more communication interfaces 320 as described herein (i.e., coupled to one of the attachment sensor 310, the security sensor and the actuation sensor 340) and each of the communication interfaces 320 may be in direct communication with the extended reality system 400.

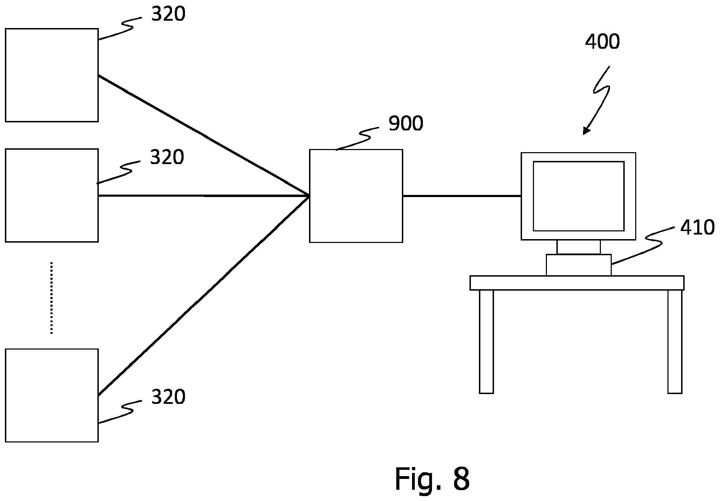

In still another variant shown in Fig. 8, the system 100 further comprises a communication bridge 900 in communication with each of the communication interfaces 320 and with the extended reality system 400 shown in Fig. 7. The communication bridge 900 is configured to receive data from the communication interfaces 320 using Bluetooth and to forward the received data to the extended reality system 400 using WiFi. The communication bridge 900 may be configured to be attachable to the belt 200 ensuring that during use of the system 100, the communication interfaces 320 are in a Bluetooth reception range with respect to the communication bridge 900. The WiFi communication between the communication bridge 900 and the extended reality system 400 allows for greater communication ranges compared to direct Bluetooth communication.

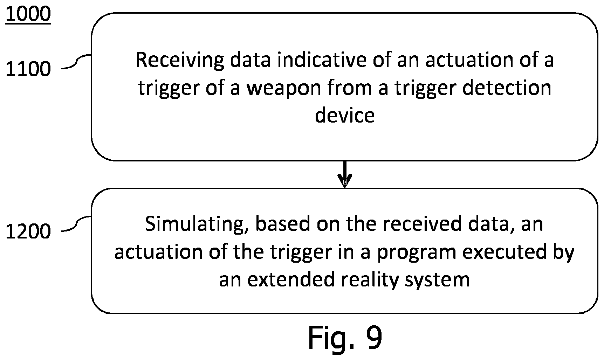

Fig. 9 shows a flow diagram of a method 1000 for simulating an actuation of a trigger 720 of a weapon 300f in a program executed by an extended reality system 400, in particular, by the computing device 410 of the extended reality system 400 as shown in Fig. 1.

The method 1000 comprises a first step 1100 of receiving data indicative of an actuation of a trigger 720 of a weapon 300f from a trigger detection device 600 as described herein. In a second step 1200, the method comprises simulating, based on the received data, an actuation of the trigger 720 in a program executed by an extended reality system 400.

The method may comprise additional steps not shown in Fig. 9. The additional steps may comprise the associated method step described herein, including one or more of the data transmission and/or simulation steps described with reference to Figs. 1 to 8, for example. In particular, data transmissions from one or more communication interfaces 320 of one or more tools 300 and/or holding elements 210 to the extended reality system 400 as described herein may be comprised, allowing the extended reality system to execute a program based at least in part on the received data, i.e., to simulate at least one of a presence of a training tool 300, the position and/or orientation of the present tool 300, and an actuation thereof.

As has become apparent from the above description, the belt system 100 described herein allows for training a user with an extended reality system 400 with an improved realism compared to existing training systems. In particular, the belt system 100 allows utilizing a plurality of different training tools 300 as well as training e.g. with an actual weapon 300f as used by the user in the intended profession instead of being limited to a mere replica of the weapon. Still further, since the weapon 300f can be used in the belt system 100 without the need for any physical alterations thereof, possible legal problems with using an altered weapon are prevented.

The features described in relation to the exemplary embodiments shown in the drawings can be readily combined to result in different embodiments. It is apparent, therefore, that the present disclosure may be varied in many ways. Such variations are not to be regarded as a departure from the scope of the invention as defined by the claims appended hereto.

## Claims

1. A belt system (100) for enabling security tool-based extended reality, XR, training of a user, the system (100) comprising:
a training tool (300);
a belt (200) configured to detachably receive the training tool (300);
an attachment sensor (310) configured to detect an attachment status of the training tool (300), wherein the attachment status indicates whether the training tool (300) is attached to the belt (200); and
a communication interface (320) coupled to the attachment sensor (310) and configured to transmit data indicative of the attachment status to an extended reality system (400).

2. The system (100) of claim 1, wherein one of the belt (200) and the training tool (300) comprises the attachment sensor (310) and the communication interface (320).

3. The system (100) of claim 1 or 2, wherein the belt (200) comprises a holding element (210) configured to detachably receive the training tool (300) and, optionally, wherein the holding element (210) comprises the attachment sensor (310) and the communication interface (320).

4. The system (100) of claim 2 or 3, wherein the holding element (210) comprises:
a security element movable between a secured state and an unsecured state, wherein the security element is configured to:
prevent a detachment of the training tool (300) from the belt (200) when the training tool (300) is attached to the belt (200) and the security element is in the secured state, and
allow a detachment of the training tool (300) from the belt (200) when the training tool (300) is attached to the belt (200) and the security element is in the unsecured state; and
a security sensor configured to detect a security status of the security element, wherein the security status indicates whether the security element is in the secured state; and
a communication interface coupled to the security sensor and configured to transmit data indicative of the security status to the extended reality system (400).

5. The system (100) of any preceding claim, wherein the training tool (300) comprises one of a weapon (300a, 300d, 300e, 300f), a flashlight (300b) and handcuffs (300c), wherein, optionally, the weapon may be a baton (300d), pepper spray (300e) or a gun (300a, 300f).

6. The system (100) of claim 5, wherein the training tool (300) comprises:
a weapon (300a, 300d, 300e, 300f);
an actuation sensor (340, 640) configured to detect an actuation of the weapon (300a, 300d, 300e, 300f); and
a communication interface coupled to the actuation sensor (340, 640) and configured to transmit data indicative of the actuation of the weapon (300a, 300d, 300e, 300f) to the extended reality system (400).

7. The system (100) of claim 5 or 6, comprising a plurality of training tools (300), wherein at least two of the plurality of training tools (300) comprise a different one selected from a taser (300a), a pistol (300f), any other gun type, pepper spray (300e), a flashlight (300b), a baton (300d) and handcuffs (300c).

8. The system (100) of any preceding claim, wherein the training tool (300) or, when dependent on claim 7, at least one of the plurality of training tools (300) comprises a replica of a weapon (300a, 300d, 300e, 300f), a flashlight (300b) and handcuffs (300c).

9. The system (100) of claim 7, wherein the replica comprises:
an actuation sensor (340, 640) configured to detect an actuation of the replica; and
a communication interface coupled to the actuation sensor (340, 640) and configured to transmit data indicative of the actuation of the replica to the extended reality system (400).

10. The system (100) of any preceding claim, further comprising a communication bridge (900) configured to:
receive data from the communication interface coupled to the attachment sensor (310) using a first data communication technology; and
forward the received data using a second data communication technology to the extended reality system (400),
wherein, optionally, the first data communication technology is Bluetooth and the second data communication technology is WiFi.

11. The system (100) of claim 9 or 10, wherein the communication bridge (900) comprises a connection status display configured to indicate at least one of a connection that has been established using the first data communication technology and a connection that has been established using the second data communication technology.

12. The system (100) of any preceding claim, wherein the training tool (300) comprises:
a tracker (330) configured to enable tracking of a position and/or an orientation of the training tool (300).

13. The system (100) of any preceding claim, further comprising the extended reality system (400), wherein the extended reality system (400) is configured to:
receive data from the communication interface (320) coupled to the attachment sensor (310); and
execute an extended reality program based at least in part on the received data.

14. A belt (200) or holding element (210) attachable to a belt (200) for enabling security tool-based extended reality, XR, training of a user, wherein the belt (200) or the holding element (210) is configured to detachably receive a training tool (300) and comprises:
an attachment sensor (310) configured to detect an attachment status of the training tool (300), wherein the attachment status indicates whether the training tool (300) is attached to the belt (200); and
a communication interface (320) coupled to the attachment sensor (310) and configured to transmit data indicative of the attachment status to an extended reality system (400).

15. A training tool (300) for security tool-based enabling extended reality, XR, training of a user, wherein the training tool (300) is configured to be detachably attachable to a belt (200) and comprises:
an attachment sensor (310) configured to detect an attachment status of the training tool (300), wherein the attachment status indicates whether the training tool (300) is attached to the belt (200); and
a communication interface (320) coupled to the attachment sensor (310) and configured to transmit data indicative of the attachment status to an extended reality system (400).

## Amended claims

### Amended claims in accordance with Rule 137(2) EPC.

1. A belt system (100) for enabling security tool-based extended reality, XR, training of a user, the system (100) comprising:
a training tool (300);
a belt (200) configured to detachably receive the training tool (300);
an attachment sensor (310) configured to detect an attachment status of the training tool (300), wherein the attachment status indicates whether the training tool (300) is attached to the belt (200); and
a communication interface (320) coupled to the attachment sensor (310) and configured to transmit data indicative of the attachment status to an extended reality system (400).

2. The system (100) of claim 1, wherein one of the belt (200) and the training tool (300) comprises the attachment sensor (310) and the communication interface (320).

3. The system (100) of claim 1 or 2, wherein the belt (200) comprises a holding element (210) configured to detachably receive the training tool (300) and, optionally, wherein the holding element (210) comprises the attachment sensor (310) and the communication interface (320).

4. The system (100) of claim 3, wherein the holding element (210) comprises:
a security element movable between a secured state and an unsecured state, wherein the security element is configured to:
prevent a detachment of the training tool (300) from the belt (200) when the training tool (300) is attached to the belt (200) and the security element is in the secured state, and
allow a detachment of the training tool (300) from the belt (200) when the training tool (300) is attached to the belt (200) and the security element is in the unsecured state; and
a security sensor configured to detect a security status of the security element, wherein the security status indicates whether the security element is in the secured state; and
a communication interface coupled to the security sensor and configured to transmit data indicative of the security status to the extended reality system (400).

5. The system (100) of any preceding claim, wherein the training tool (300) comprises one of a weapon (300a, 300d, 300e, 300f), a flashlight (300b) and handcuffs (300c), wherein, optionally, the weapon may be a baton (300d), pepper spray (300e) or a gun (300a, 300f).

6. The system (100) of claim 5, wherein the training tool (300) comprises:
a weapon (300a, 300d, 300e, 300f);
an actuation sensor (340, 640) configured to detect an actuation of the weapon (300a, 300d, 300e, 300f); and
a communication interface coupled to the actuation sensor (340, 640) and configured to transmit data indicative of the actuation of the weapon (300a, 300d, 300e, 300f) to the extended reality system (400).

7. The system (100) of claim 5 or 6, comprising a plurality of training tools (300), wherein at least two of the plurality of training tools (300) comprise a different one selected from a taser (300a), a pistol (300f), any other gun type, pepper spray (300e), a flashlight (300b), a baton (300d) and handcuffs (300c).

8. The system (100) of any preceding claim, wherein the training tool (300) or, when dependent on claim 7, at least one of the plurality of training tools (300) comprises a replica of a weapon (300a, 300d, 300e, 300f), a flashlight (300b) and handcuffs (300c).

9. The system (100) of claim 8, wherein the replica comprises:
an actuation sensor (340, 640) configured to detect an actuation of the replica; and
a communication interface coupled to the actuation sensor (340, 640) and configured to transmit data indicative of the actuation of the replica to the extended reality system (400).

10. The system (100) of any preceding claim, further comprising a communication bridge (900) configured to:
receive data from the communication interface coupled to the attachment sensor (310) using a first data communication technology; and
forward the received data using a second data communication technology to the extended reality system (400),
wherein, optionally, the first data communication technology is Bluetooth and the second data communication technology is WiFi.

11. The system (100) of claim 10, wherein the communication bridge (900) comprises a connection status display configured to indicate at least one of a connection that has been established using the first data communication technology and a connection that has been established using the second data communication technology.

12. The system (100) of any preceding claim, wherein the training tool (300) comprises:
a tracker (330) configured to enable tracking of a position and/or an orientation of the training tool (300).

13. The system (100) of any preceding claim, further comprising the extended reality system (400), wherein the extended reality system (400) is configured to:
receive data from the communication interface (320) coupled to the attachment sensor (310); and
execute an extended reality program based at least in part on the received data.

14. A belt (200) or holding element (210) attachable to a belt (200) for enabling security tool-based extended reality, XR, training of a user, wherein the belt (200) or the holding element (210) is configured to detachably receive a training tool (300) and comprises:
an attachment sensor (310) configured to detect an attachment status of the training tool (300), wherein the attachment status indicates whether the training tool (300) is attached to the belt (200); and
a communication interface (320) coupled to the attachment sensor (310) and configured to transmit data indicative of the attachment status to an extended reality system (400).

15. A training tool (300) for security tool-based enabling extended reality, XR, training of a user, wherein the training tool (300) is configured to be detachably attachable to a belt (200) and comprises:
an attachment sensor (310) configured to detect an attachment status of the training tool (300), wherein the attachment status indicates whether the training tool (300) is attached to the belt (200); and
a communication interface (320) coupled to the attachment sensor (310) and configured to transmit data indicative of the attachment status to an extended reality system (400).
